# EUROPÄISCHE PATENTSCHRIFT

(11) **EP 0 809 223 B1**
(45) Veröffentlichungstag und Bekanntmachung des Hinweises auf die Patenterteilung: **05.03.2003**
(21) Anmeldenummer: 96108196.5
(22) Anmeldetag: 22.05.1996
(51) Int. Cl.: G09B 21/04, G06F 3/00

(54) **Vorrichtung zum Übermitteln von Zeichen und Buchstaben von einer Datenverarbeitungsanlage an eine taubblinde Person**
Device for transmission of signs and characters from a data-processing system to a deaf-blind person
Dispositif de transmission de signes et de caractères d'un système de traitement de données à une personne sourde/aveugle

(43) Veröffentlichungstag der Anmeldung: 26.11.1997
(73) Patentinhaber: Rupp, Thomas, 40231 Düsseldorf (DE)
(72) Erfinder: Rupp, Thomas, 40231 Düsseldorf (DE)
(74) Vertreter: Stenger, Watzke & Ring Patentanwälte

(56) Entgegenhaltungen:
- WO-A-89/03569
- WO-A-92/05519
- WO-A-92/18925
- FR-A- 2 411 603
- US-A- 2 972 140
- US-A- 3 831 296
- US-A- 4 414 537
- US-A- 4 972 074
- US-A- 5 165 897

## Beschreibung

Die Erfindung betrifft eine Vorrichtung zur Übermittlung einer Taub-Blinden-Sprache, insbesondere der Lorm-Sprache, wobei in einer Datenverarbeitungsanlage gespeicherte Zeichen insbesondere Buchstaben oder Buchstabenreihen nacheinander an eine Person übertragbar sind.

Personen, die miteinander kommunizieren, bedienen sich jeweils einer bestimmten Sprache. Personen, die sehen und/oder hören können, kommunizieren, indem sie sich gegenseitig akustische und/oder optische Zeichen übermitteln. Bei bestimmten Personen ist eine derartige Kommunikation jedoch nicht möglich. So können z.B. taubblinde Personen weder sehen noch hören. Eine akustische oder visuelle Kommunikation ist bei diesen Personen nicht möglich.

Taubblinde Personen bedienen sich daher der Lorm-Sprache. Diese Sprache wurde von Hieronimus Lorm erfunden. Von Land zu Land haben sich unterschiedliche Lorm-Sprache-Dialekte (ähnlich wie bei anderen Sprachen) entwickelt.

Damit taubblinde Personen mittels der Lorm-Sprache kommunizieren können, müssen sie sich gegenseitig die Hand geben. Durch Drücken oder Streichen über bestimmte Bereiche der Hand der anderen Person werden diese Buchstaben bzw. Buchstabenkombinationen wie z. B. "st"/ oder "sch" nacheinander übertragen.

Nachteilig bei dieser Art der Kommunikation ist, daß die miteinander kommunizierenden Personen stets in direktem Körperkontakt miteinander sein müssen. Auch ist es für eine taubblinde Person von Nachteil, daß sie nicht in der Lage ist, ein gedrucktes Buch oder einen in einem Computer gespeicherten Text zu lesen. Zwar gibt es für Blinde eine sogenannte Braille-Zeile, über die der Blinde mit seinen Fingerspitzen streicht. Kleine Stifte erzeugen bei der Braille-Zeile ein Muster von Wellentälern und Wellenbergen, wobei diese Muster bestimmten Buchstaben entsprechen. Der Taubblinde kann sich jedoch der Braille-Zeile kaum bedienen, da es für einen taubblinden Menschen nur sehr schwer möglich ist, die Blindenschrift, wie sie von der Braille-Zeile verwendet wird, zu erlernen. Ein Taubblinder benötigt daher stets einen Vorleser, der ihm die gedruckten Buchstaben und Wörter eines Textes mittels der Lorm-Sprache in die Hand überträgt.

Aus dem Stand der Technik sind Vorrichtungen bekannt, welche dazu dienen, Zeichen von einer Person an einer Datenverarbeitungsanlage zu übermitteln. Eine solche Vorrichtung offenbart beispielsweise die FR 2 411 603. Bekannt ist aus dieser französischen Patentschrift ein bandförmiges Eingabemedium, das wenigstens einen Sensor aufweist, mittels welchem die Bedienperson, beispielsweise unter Verwendung der Lorm-Sprache, Informationen an die mit dem Sensor verbundene Datenverarbeitungsanlage übertragen kann. Eine vergleichbare Vorrichtung offenbart auch die WO 89/03569. Bekannt ist aus dieser Druckschrift ein mit Sensoren versehener, handschuhähnlicher Überzug, in dessen Innenraum die Hand der Bedienperson einleg- bzw. einschiebbar ist. Von der Bedienperson vorgegebene Signale werden mittels der Sensoren detektiert und in elektrische Impulse umgewandelt, welche dann an die Datenverarbeitungsanlage übermittelt werden. Femer ist aus der US 3,831,296 ein Verfahren zur Kommunikation mit einer taubblinden Person bekannt. Es ist vorgesehen, daß die von einer nicht taubblinden Person über die Tastatur eines Rechners eingegebene Information umgewandelt und zur Signalausgabe an entsprechende, innerhalb eines Handschuhs angeordnete Aktuatoren ausgegeben wird.

Aufgabe der Erfindung ist es daher, eine Vorrichtung bereitzustellen, die es einem taubblinden Menschen ermöglicht, Texte, die in einer Datenverarbeitungsanlage gespeichert sind, selbständig und ohne Hilfe Dritter mittels der ihm schon geläufigen Lorm-Sprache zu lesen.

Diese Aufgabe wird erfindungsgemäß dadurch gelöst, daß die Vorrichtung mindestens ein reizausübendes Mittel hat, und daß das reizausübendes Mittel eine an oder nahe dem reizausübenden Mittel liegende Hand der Person punktförmig, flächenhaft und/oder von einem Anfangspunkt hin zu einem Endpunkt bahnen- oder linienförmig zeitweise reizbeaufschlagt, wobei die Zeichen bestimmten Punkten, Bahnen, Linien und/oder Flächen auf der Hand zuordbar sind, und daß das reizausübende Mittel beweglich gelagert ist und mittels mindestens eines Stellantriebs in eine von einer Steuerung vorgebbare Position und/oder in beliebig vorgebbaren Bahnen insbesondere frei im Raum mittels eines x-y-Antriebs programmgesteuert verfahrbar ist.

Eine derartige Vorrichtung hat den Vorteil, daß die taubblinde Person auch ohne fremde Hilfe Texte lesen und sich somit wesentlich besser bilden kann. Dadurch, daß die Vorrichtung mit ihren reizausübenden Mitteln die Hand der taubblinden Person genau so reizbeaufschlagt, wie dies die vorlesende Person tun würde, muß der Taubblinde keine neue Sprache erlernen, sondern kann sich der ihm bekannten Lorm-Sprache bedienen.

Die Vorrichtung hat dabei zweckmäßigerweise Elektromotoren, die von einer Steuerung gesteuert oder geregelt sind, wobei die Elektromotoren das reizausübende Mittel von einer Position zur nächsten verfahren. Die Motoren sind hierfür vorteilhaft Schrittmotoren, um eine genaue und kostengünstig herstellbare Steuerung zu ermöglichen.

Um die Hand der taubblinden Person nicht übermäßig stark zu reizen, ist es von Vorteil, wenn die Stärke des vom reizausübenden Mittel ausgeübten Reizes einstellbar ist, wodurch eine Überreizung der Nervenzellen der Person vermeidbar ist.

Vorteilhaft kann das reizausübende Mittel ein stiftförmiges Teil sein, das die Hand der Person punktuell druckbeaufschlagt. Das reizausübende Mittel kann jedoch auch eine Luftdüse sein, wobei mittels der Elektromotoren die Luftdüse bewegbar ist und die Vorrichtung eine Pumpe hat, die Luft ansaugt und diese durch die Luftdüse pumpt. Ein stiftförmiges Teil als reizausübendes Mittel ist vorteilhaft dann einzusetzen, wenn mehrere reizausübende Mittel rasterförmig nebeneinander angeordnet sind. Die Reizausübung mittels eines Luftstrahls hat den Vorteil, daß die Hand der Person nicht in direkten Kontakt mit der Vorrichtung kommt, wodurch sich keine Probleme hinsichtlich der Hygiene ergeben. Zudem kann die Oberfläche der Hand beliebig gekrümmt sein ohne das der Schreib- bzw. Übertragungsvorgang durch die Oberflächenkrümmung oder durch die Oberflächenbeschaffenheit beeinflußt bzw. beeinträchtigt wird.

Vorteilhaft ist dabei der Luftstrahl mittels der den Luftstrahl erzeugenden Pumpe oder eines zwischen der Pumpe und der Luftdüse befindlichen Ventils steuerbar.

Da die Hände von Person zu Person in ihrer Größe und Form unterschiedlich ausgebildet sind, ist es notwendig, der Vorrichtung vor der Datenübertragung die Geometrie der gerade in der Vorrichtung einliegenden Hand mitzuteilen. Dies kann unter anderem dadurch geschehen, in dem man das reizausübende Mittel zu bestimmten Punkten, sogenannten Kalibrierungspunkten verfährt. Die Lage dieser Punkte wird von der Steuerung der Vorrichtung erfaßt. Anhand dieser ermittelten Positionen errechnet sich dann die Steuerung die für die Umsetzung der Zeichen in Punkte und Linien auf der Hand notwendigen Parameter. Um die Kalibrierungspunkte auf der Hand exakt anfahren zu können, ist es von Vorteil, wenn am reizausübenden Mittel eine gebündeltes Licht aussendende Quelle insbesondere ein Laser ist, die mit dem reizausübenden Mittel verfahrbar ist und deren Licht auf die reizzubeaufschlagende Stelle gerichtet ist.

Da die Hand in der Vorrichtung über einen längeren Zeitraum einliegt, und ihre Position relativ zur Vorrichtung nicht verändern darf, ist es von Vorteil, wenn die einliegende Hand und eventuell auch ein Teil des Unterarms auf einer entsprechend den Arm- und Handkonturen angepaßten Auflage auf- bzw. anliegt. Durch die Paßform wird die Hand zum einen in Position gehalten und zum anderen kann die Hand entspannt eingelegt werden, was das Benutzen der Vorrichtung erleichtert. Die Auflage kann in ihrer einfachsten Ausführung ein Gitter sein, auf daß die Person ihre Hand legt, wobei dann das reizausübende Mittel eine Luftdüse ist, die durch das Gitter Luft auf die Handinnenseite bläst. Es ist jedoch auch möglich ein Vakuumkissen zu verwenden, wobei zuerst die Hand in das mit Luft gefüllte Vakuumkissen eingelegt und anschließende die Luft zur Fixierung der Hand abgepumpt wird. Mittels eines derartigen Kissens kann die Vorrichtung vorteilhaft von mehreren Personen mit unterschiedlich gestalteten Händen benutzt werden.

Es ist zudem möglich, die Vorrichtung frei im Raum auf zuhängen. Dabei ist es besonders vorteilhaft, wenn die Vorrichtung um mehr als zwei Freiheitsgerade verschwenk- und/oder verdrehbar ist. Hierdurch kann die Person während der Übertragung ihren Arm oder ihre Hand bewegen und so einer Muskelverspannung vorbeugen. Die Vorrichtung kann dabei z.B. an einem verschwenkbar und drehbar gelagerten Arm mittels eines Kugelgelenks befestigt werden, wodurch die Person ihren Arm in beliebigen Positionen im Raum halten kann.

Es ist ferner vorteilhaft, wenn die Vorrichtung ein insbesondere handschuhähnliches Teil hat, in dessen Innenraum die Hand der Person einleg- bzw. einschiebbar ist, wobei das handschuhähnliche Teil mit seiner Innenfläche an der Hand der Person anliegt und über die Innenfläche des handschuhähnlichen Teils reizausübende Mittel verteilt angeordnet sind, die mit der Datenverarbeitungsanlage oder einer dazwischen geschalteten Steuerung verbunden und von dieser steuerbar sind. Das insbesondere handschuhähnliche Teil ist dabei vorzugsweise aus einem flexiblen Material, insbesondere einem Faser- oder netzförmigen Material. Durch die handschuhähnliche Ausgestaltung wird erreicht, daß die Person ihre Hand während der Datenübertragung frei bewegen kann. Dies hat den Vorteil, daß die Hand nicht stets in ein- und derselben Position verharren muß. Entsprechende Handschuhe mit aufblasbaren Druckkammern sind unter anderem aus der PCT/GB91/01637 bekannt. Durch die zunehmende Miniaturisierung der elektronischen Bauteile und Schaltungen ist es möglich, die Steuerung samt Interface zur Datenverarbeitungsanlage in dem handschuhähnlichen Teil zu integrieren, wodurch die Person ebenfalls nicht mehr an einen Ort gebunden ist.

In einer weiteren vorteilhaft Ausführung der Erfindung ist ein Eingabemedium vorgesehen, mittels der die Übertragung steuerbar ist, wobei insbesondere die Zahl der zu übertragenden Zeichen pro Zeiteinheit einstellbar und/oder die Übertragung startbar, anhaltbar oder wiederholbar ist. Ein derartiges Eingabemedium können Schalter oder Taster sein. Die taubblinde Person ist hiermit in der Lage, Buchstaben, Wörter oder ganze Textpassagen sich wiederholen zu lassen oder beliebig im Text hin- und her zu springen.

Ein vorteilhaftes Verfahren zum Übermitteln von Zeichen, insbesondere Buchstaben oder Buchstabenreihen mittels der Vorrichtung ist dadurch gekennzeichnet, daß die Vorrichtung mittels einer in einem Speicher gespeicherten Übersetzungstabelle einen zu übertragenden Buchstaben oder Buchstabenreihen bestimmten Punkten, Bahnen und/oder Flächen der Hand der Person zuordnet und anschließend die Vorrichtung die zugeordneten Punkte oder Bahnen der Hand der Person mittels der bzw. des reizausübenden Mittel(s) reizbeaufschlagt. Dazu legt die Person ihre Hand zu Beginn der Übertragung in die Vorrichtung ein. In Abhängigkeit vom Aufbau der Vorrichtung wird danach anschließend mittels geeigneter Sensoren die Größe bzw. die Konturen der Hand und/oder die Position der Hand in der Vorrichtung erfaßt. Diese Daten werden in dem Speicher der Steuerungsanlage bzw. Datenverarbeitungsanlage abgelegt. Anschließend werden die zu übertragenden Buchstaben des zu übertragenden Textes aus dem Speicher der Datenverarbeitungsanlage herausgelesen und nacheinander von der Vorrichtung an die Person übertragen, wobei die Person die Übertragungsgeschwindigkeit mittels des Eingabemediums bestimmt sowie die Übertragung startet und stoppt oder bestimmte Textpassagen erneut übertragen läßt. Ein derartiges Verfahren hat den Vorteil, daß die Person jederzeit in der Lage ist, die Übertragung anzuhalten und die Übertragung an einer anderen Stelle des Textes fortzusetzen.

Vorgeschlagen wird mit der Erfindung ferner eine Einrichtung zur Kommunikation einer insbesondere taubblinden Person mit einer Datenverarbeitungsanlage mittels der Lorm-Sprache, wobei in einer Datenverarbeitungsanlage gespeicherte Zeichen mittels der vorbeschriebenen Vorrichtung nacheinander an die Hand der Person übertragbar sind. Diese Einrichtung ist dadurch gekennzeichnet, daß sie ein insbesondere handschuhähnliches Teil hat, in dessen Innenraum die Hand der Person einleg- bzw. einschiebbar ist, wobei das handschuhähnliche Teil mit seiner Innenfläche an der Hand der Person anliegt und über die Innenfläche des handschuhähnlichen Teils reizausübende Mittel verteilt angeordnet sind, die mit der Datenverarbeitungsanlage oder einer dazwischen geschalteten Steuerung verbunden und von dieser steuerbar sind, und daß auf der Oberfläche des handschuhähnlichen Teils Sensoren oder eine Sensorfohe ist, die die auf die Oberfläche gezeichneten Zeichen insbesondere Punkte und Linien detektiert und in elektrische Signale umformt und die Signale an die Datenverarbeitungsanlage übermittelt.

Da das Eingabemedium vorteilhaft die Form einer Hand hat, kann die taubblinde Person mit der ihr geläufigen Lorm-Sprache ohne weiteres anlernen, Daten in die Datenverarbeitungsanlage eingeben. Eine besonders einfache Ausgestaltung des Eingabemediums ergibt sich, wenn die Sensoren oder die Sensorfolie Druck-, Temperatur- oder Lichtsensoren sind/hat. Die Sensoren sollten ferner vorteilhaft in einem Raster insbesondere matrixförmig angeordnet. Dabei ist jeder Sensor mit der Datenverarbeitungsanlage in Verbindung und sendet entsprechend dem auf ihn ausgeübten Reiz, insbesondere Druck, Signale an die Datenverarbeitungsanlage. Die Sensoren sind hierzu vorteilhaft an den Stellen der Oberfläche des handförmigen Eingabemediums angeordnet, denen durch die Lorm-Sprache ein bestimmter Buchstabe oder bestimmte Buchstabenkombinationen zugeordnet sind. Derartige Sensoren können derart gestaltet sein, daß durch Ausüben eines Druckes auf den Sensor Kontakte eines elektrischen Stromkreises geschlossen werden, wodurch ein Signal ausgelöst und an die Datenverarbeitungsanlage übertragen wird.

vorteilhaft übt das reizausübende Mittel des Eingabehandschuhs mittels Druck, Wärme und/oder Strom Reize auf die Hand der Person aus, wodurch je nach Empfinden der Person ein entsprechender Reiz ausgeübt werden kann. Auch kann ein Umstellen von einer Reizart auf eine andere von Vorteil sein, wenn die Hand der Person bestimmte Reize nicht mehr wahrnimmt.

In einer weiteren vorteilhaften Ausführungsform ist ein Mindest-Reiz-Schwellwert einstellbar, wobei eine Elektronik vorgesehen ist, die den Schwellwert mit dem auf die Oberfläche des Eingabemediums ausgeübten Reiz vergleicht und Signale an die Datenverarbeitungsanlage aussendet, wenn der ausgeübte Reiz größer ist als der voreingestellte Schwellwert. Durch die Einstellmöglichkeit eines derartigen Reiz-Schwellwerts kann durch den Benutzer festgelegt werden, ab wann ein ausgeübter Druck einem zu übertragenden Buchstaben entspricht. Hierdurch ist stets gewährleistet, daß durch versehentliches Berühren der Oberfläche des Eingabemediums kein entsprechender Buchstabe an die Datenverarbeitungsanlage übertragen wird.

Durch die Lorm-Sprache sind bestimmten Bereichen bzw. Punkten, Bahnen oder Linien der Hand bestimmte Buchstaben bzw. Buchstabenkombinationen zugeordnet. An einigen Stellen der Hand liegen die Buchstaben darstellenden Druckpunkte relativ dicht beieinander. Um unnötige Kosten für eine Vielzahl von Sensoren niedrig zu halten, ist es von Vorteil, wenn je nach Position auf der Oberfläche des Eingabemediums der Sensor eine unterschiedlich große Meßfläche hat. Auch ist es von Vorteil, wenn je nach Position auf der Oberfläche des Eingabemediums jedem Sensor ein Schwellwert zugeordnet ist, der mittels der Datenverarbeitungsanlage einstellbar bzw. veränderbar ist. Hat die Person den Eingabehandschuh über ihre Hand gezogen, so muß sie mit den im Handschuh befindlichen Fingern eine Gegenkraft zur Andruckkraft der anderen Hand ausüben, damit ein bestimmter Reiz-Schwellwert überschritten wird. Würden sämtliche Sensoren erst bei demselben Schwellwert ein Signal auslösen, so müßte die Person dann eine unverhältnismäßig gleichmäßig große Gegenkraft mit ihren Fingern aufbringen, würde z. B. eine Fingerkuppe druckbeaufschlagt. Durch einen kleineren Reiz-Schwellwert kann jedoch die auszuübende Gegenkraft vorteilhaft verringert werden.

Die oben beschriebenen Vorrichtungen sind dazu geeignet, daß taubblinde Personen miteinander auch dann kommunizieren können, wenn sie nicht an ein- und demselben Ort verweilen und sich gegenseitig die Hand zur Übermittlung der Buchstaben reichen können. Die hier vorgestellten Vorrichtungen können somit auch als eine Art Telefon für taubblinde Personen angesehen werden.

Nachfolgend werden die erfindungsgemäßen Vorrichtungen anhand der Zeichnungen näher erläutert.

Es zeigen:
- Figur 1:: Eine Vorrichtung zum Übermitteln von in einer Datenverarbeitungsanlage gespeicherten Daten auf die Hand einer Person;
- Figur 2:: eine Querschnittsdarstellung der Vorrichtung gemäß Figur 1 mit einem Stift als reizausübendem Mittel;
- Figur 3:: eine Querschnittsdarstellung der Vorrichtung nach Figur 1 mit einer Luftdüse als reizausübendem Mittel;
- Figur 4a, 4b, 4c:: Eine Vorrichtung zur Übermittlung von Daten aus einer Datenverarbeitungsanlage auf die Oberfläche der Hand einer Person mittels eines Luftstrahls;
- Figur 5:: eine Positionserfassung der in eine Vorrichtung gemäß der Figuren 1 bis 4 eingelegten Hand;
- Figur 6:: ein Tast-Alphabet für Taubblinde entsprechend der Lorm-Sprache;
- Figur 7a und 7b:: Querschnitts darstellung einer Vorrichtung zum Übermitteln von Daten Person;
- Figur 8:: zwei miteinander verbundene Vorrichtungen zun Einlesen und Auslesen von Daten;
- Figur 8a:: eine Querschnittsdarstellung des Eingabemediums mit druckempfindlicher Oberflächenbeschichtung.

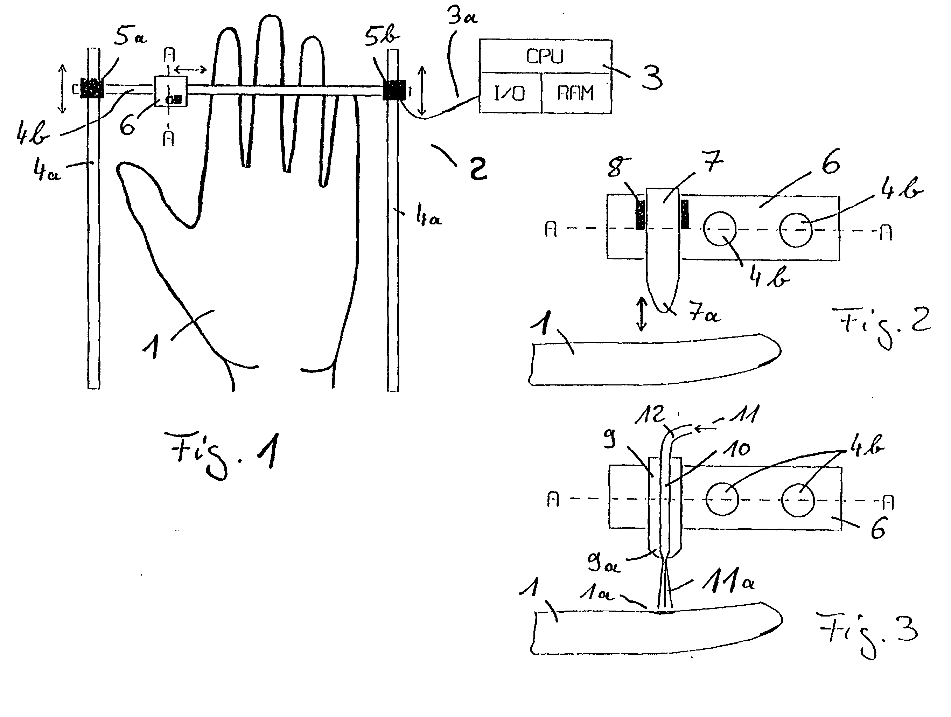

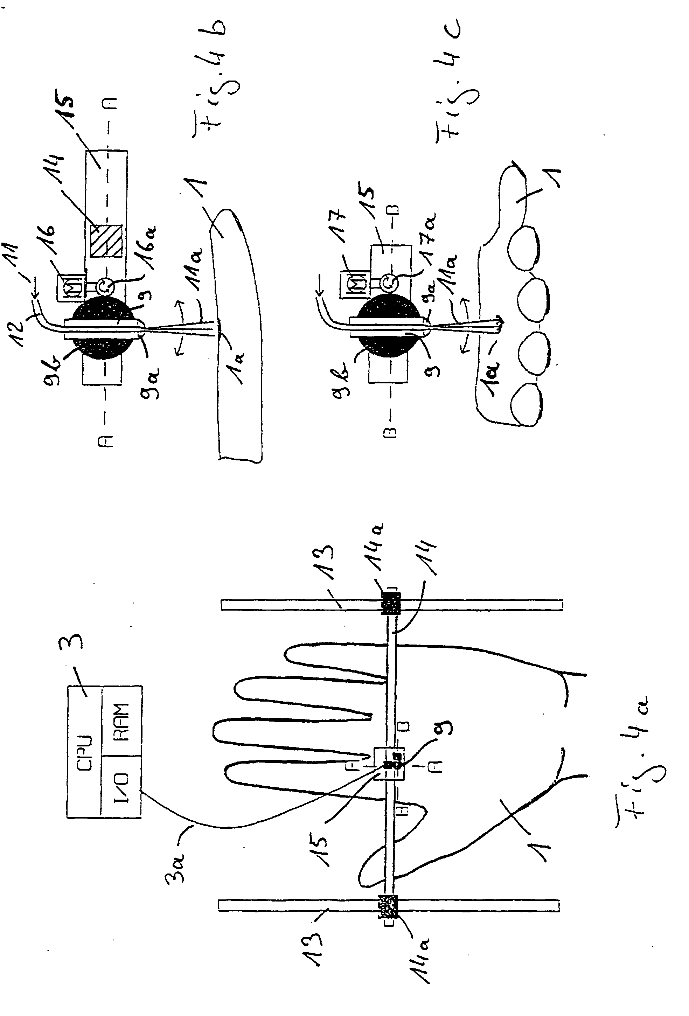

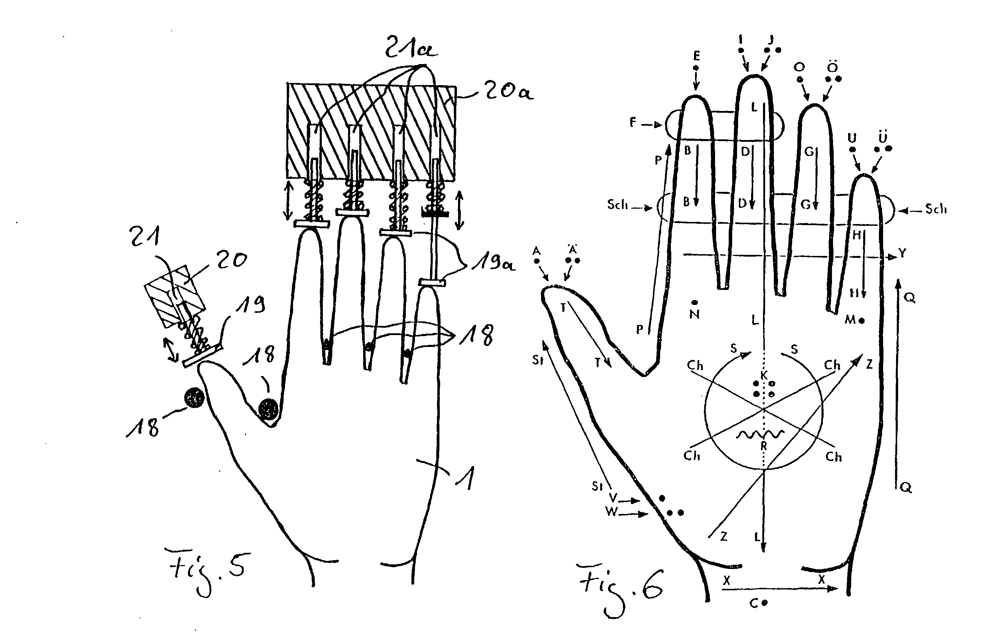

Figur 1 zeigt eine Vorrichtung zum Übermitteln von Zeichen, die in einer Datenverarbeitungsanlage 3 gespeichert sind, an die Hand 1 einer Person. Die Datenverarbeitungsanlage 3 ist mittels einer Daten- und Steuerleitung 3a mit der Vorrichtung 2 in elektrischer Verbindung. Die Vorrichtung 2 ist eine Art Portalanlage mit zwei parallel zur Hand verlaufenden Führungsschienen 4a. An den Führungsschienen 4a ist eine senkrecht zu den Führungsschienen verlaufende weitere Führungsschiene 4b verschieblich gelagert, welche mittels des Antriebs 5a entlang der Führungsschienen 4a verfahrbar ist. Mittels des Antriebes Sb ist der auf der Führungsschiene 4b verschieblich gelagerte Schreibkopf 6 in Richtung der Führungsschiene 4b beliebig verfahrbar. Der Schreibkopf 6 beinhaltet ein reizausübendes Mittel. In den Figuren 2 und 3 sind jeweils verschiedene reizausübende Mittel 7a und 9a dargestellt.

In Figur 2 ist ein Stift 7 dargestellt, der mittels eines Antriebs 8 senkrecht zur Oberfläche der Hand 1 verfahrbar ist. Der Antrieb 8 kann dabei ein Magnet oder Elektroantrieb sein. Bei der Realisierung mittels eines Elektromotors wird der Stift zum Druckausüben vom Elektromotor nach unten verfahren und druckbeaufschlagt mit seiner Spitze 7a die Innenfläche der Hand 1. Bei der Realisierung mittels eines Magnetantriebs ist der Antrieb 8 eine Ringspule. Sobald die Ringspule von einem Strom durchflossen ist, wird entweder der Stift 7 aus der Ringspule herausgetrieben oder hereingezogen. Auch kann der Stift 7 durch Druckluft bewegt werden.

In einer nicht dargestellten Ausführungsform hat der Seift 7 an seiner Spitze 7a eine Rollkugel, die beim Verfahren des an die Hand 1 gedrückten Stiftes 7 den Reib- bzw. Rollwiderstand erniedrigt.

In einer weiteren Ausführungsform ist an dem Stift 7 ein Drucksensor befestigt, der den Anpreßdruck an die Hand 1 aufnimmt und zur Regelung des Anpreßdruckes an die Steuerung der Vorrichtung übermittelt.

In Figur 3 ist ein weiterer Schreibkopf dargestelit, wobei das reizausübende Mittel eine Luftdüse 9 ist. Mittels einer nicht dargestellten Pumpe wird Druckluft 11 durch den Zuführungsschlauch 12 zur Düse 9 gepumpt. Mittels des Düsenkopfes 9a wird der Luftstrahl ha fokussiert und trifft auf die Stelle 1a der Innenfläche der Hand 1. Zwischen der nicht dargestellten Pumpe und dem Düsenkopf 9 kann ein Druckluftvorratsbehälter angeordnet sein, der zur Aufrechterhaltung des Luftdrucks bei längeren Schreibvorgängen dient. Ferner kann zwischen dem Luftdruckbehälter und der Düse 9 ein Ventil angeordnet sein, welches den Luftstrahl ha an- und abschaltet.

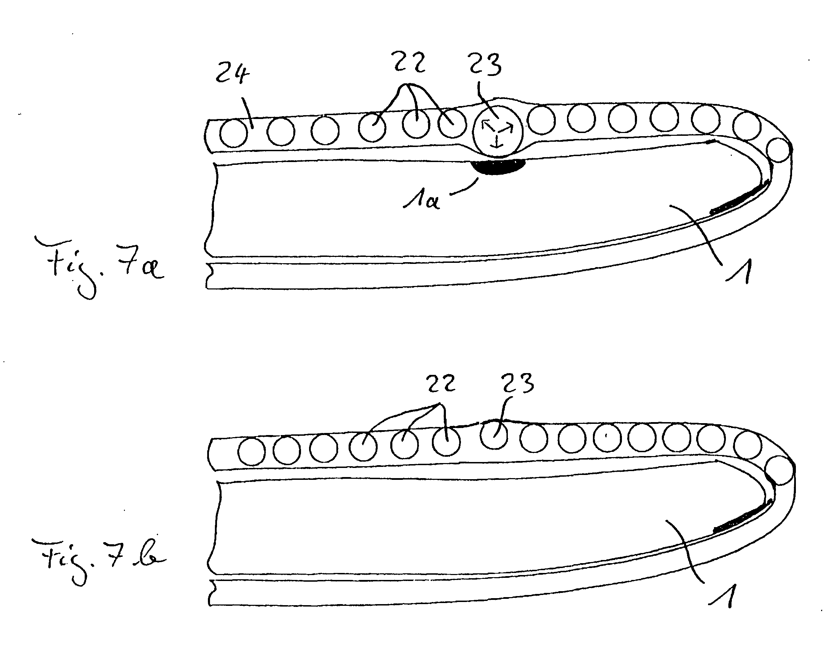

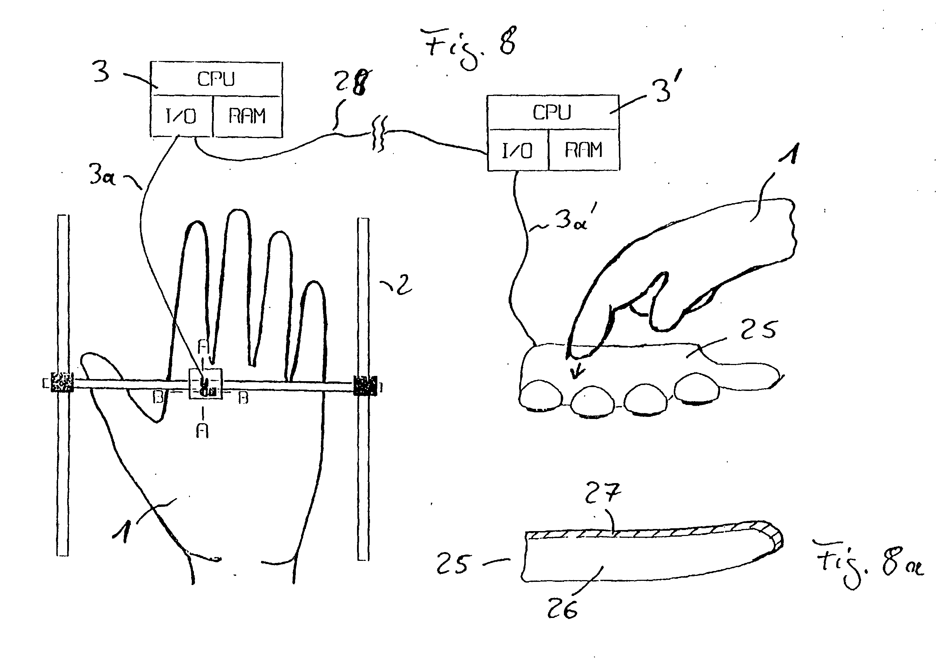

In Figur 4a ist eine weitere Vorrichtung zum Schreiben mittels eines Luftstrahls 11a dargestellt. Die Hand 1 der Person liegt in der Vorrichtung ein. Der Schreibkopf 15 ist im Gegensatz zur Vorrichtung genäß der Figur 1 relativ zur Hand 1 feststehend. Er ist an den Führungsschienen 13, 14 starr befestigt. Wie aus den Figuren 4b und 4c ersichtlich, ist die Luftdüse 9 zentrisch in einer Kugel 9b angeordnet. Die Kugel 9b liegt verdrehbar in dem Schreibkopf 15 ein und wird mittels der Motoren 16 und 17 und den von diesen Motoren angetriebenen Stellrädern 16a und 17a verschwenkt. Die Stellräder 16a und 17a sind in einem Winkel von ca. 900 zueinander an der Kugel 9b anliegend gelagert. Hierdurch wird der Luftstrahl ha auf beliebige Punkte la der Hand gerichtet. Mittels der nicht dargestellten Pumpe wird Druckluft 11 erzeugt, welche durch die Düsenaustrittsöffnung 9a auf einen Punkt 1a der Handinnenfläche fokussiert wird. Wie aus Figur 5 ersichtlich, können Stifte 18 vorgesehen sein, die fest mit der Vorrichtung in Verbindung sind. Mittels der Stifte wird die eingelegte Hand in eine für die Übertragung vorgesehene Position festgestellt. Mittels der Meßaufnehmer 19, 19a wird die Länge der Finger der Hand 1 erfaßt und an die Datenverarbeitungsanlage bzw. die Steuerung 3 der Vorrichtung übertragen, so daß die Datenverarbeitungsanlage 3 die relativen Koordinaten bezüglich der in Figur 6 dargestellten Andruckpunkte, -linien oder -bahnen berechnen kann.

Die Figur 6 zeigt eine mögliche Belegung der Hand mit Buchstaben. Mittels beliebiger Übersetzungstabellen können verschiedenste Belegungen definiert werden, die für die anschließende Übertragung als Grundlage dienen.

Die Figuren 7a und 7b zeigen eine weitere Vorrichtung zum Übermitteln von Daten von einer Datenverarbeitungsanlage an die Hand 1 einer Person. Die Person hat dabei einen Handschuh 24 über ihre Hand 1 gezogen. Der Handschuh 24 ist dabei insbesondere ein Fingerhandschuh, so daß sämtliche reizausübenden Mittel 22, 23 relativ zur Handoberfläche bei Bewegungen der Hand nicht verschoben werden. Die reizausübenden Mittel sind Aktuatoren, welche sich bei Anlegen eines Signals ausdehnen. Durch das Vergrößern ihres Volumens druckbeaufschlagen sie die Handinnenseite punktuell. Figur 7a zeigt einen Aktuatoren 23, welcher ein kleiner Ballon sein kann, der mittels Druckluft kurzzeitig aufgeblasen ist. Auch können die Aktuatoren kleine Stifte sein, wie sie z. B. in Figur 2 vergrößert dargestellt sind.

Die Figuren 8 und 8a zeigen eine Vorrichtung, mittels derer zwei Personen miteinander kommunizieren können. Die beiden Datenverarbeitungsanlage 3 und 3' sind über die Übertragungsstrecke 28 miteinander in Verbindung. Das Eingabemedium 25 ist ein handähnliches Teil, welches, wie in Figur 8a dargestellt, an seiner Oberfläche eine druckempfindliche Folie hat, wobei die druckempfindliche Folie mit der Datenverarbeitungsanlage 3' in Verbindung ist. Das Eingabemedium 25 kann jedoch auch ein Eingabehandschuh gemäß der Figuren 7a und 7b sein. Die Datenverarbeitungsanlage 3' ermittelt, an welcher Position des Eingabemediums 25 die Hand 1 der Person das Eingabemedium 25 druckbeaufschlagt. Mittels einer Übersetzungstabelle wird anhand dieser gewonnenen Information der zu übermittelnde Buchstabe herausgefunden. Der zu übertragende Buchstabe wird mittels der Übertragungsstrecke 28 an die Datenverarbeitungsanlage der zweiten Person übertragen. Mittels der Datenverarbeitungsanlage 3 wird entsprechend einer weiteren Übersetzungstabelle die zu reizbeaufschlagende Stelle auf der Hand 1 der zweiten Person gemäß des übermittelten Buchstaben ermittelt. Die Datenverarbeitungsanlage 3 verfährt das reizausübende Mittel der Vorrichtung 2 entsprechend und reizbeaufschlagt die dem übermittelten Buchstaben entsprechende Stelle der Hand 1 der zweiten Person.

## Patentansprüche

1. Vorrichtung zur Übermittlung einer Taub-Blinden-Sprache, wobei in einer Datenverarbeitungsanlage gespeicherte Zeichen nacheinander an eine Person übertragbar sind,
**dadurch gekennzeichnet,daß**
- das die Vorrichtung mindestens ein reizausübendes Mittel (7,9,22) hat, und daß
- das reizausübendes Mittel (7, 9, 22) eine an- oder nahe dem reizausübenden Mittel (7, 9, 22) liegende Hand (1) der Person punktförmig, flächenhaft und/oder von einem Anfangspunkt hin zu einem Endpunkt bahnen- oder linienförmig zeitweise reizbeaufschlagt, wobei die Zeichen bestimmten Punkten, Bahnen, Linien und/oder Flächen auf der Hand (1) zuordbar sind, und daß
- das reizausübende Mittel (7,9) beweglich gelagert ist und mittels mindestens eines Stellantriebs (5a, 5b) in eine von einer Steuerung (3) vorgebbare Position und/oder in beliebig vorgebbaren Bahnen insbesondere frei im Raum mittels eines x-y-Antriebs programmgesteuert verfahrbar ist.

2. Vorrichtung nach Anspruch 1, **dadurch gekennzeichnet, daß** die Vorrichtung (2) Elektromotoren hat, die von einer Steuerung (3) gesteuert oder geregelt sind, wobei die Elektromotoren das reizausübende Mittel (7, 9) von einer Position zur Nächsten verfahren.

3. Vorrichtung nach Anspruch 1, **dadurch gekennzeichnet, daß** das reizausübende Mittel (7, 9, 22) mittels eines Hydraulikantriebs verfahrbar ist.

4. Vorrichtung nach einem der vorherigen Ansprüche, **dadurch gekennzeichnet, daß** das reizausübende Mittel ein stiftförmiges Teil (7) ist, das die Hand (1) der Person punktuell druckbeaufschlagt, und daß stiftförmiges Teil (7) mittels eines Stellantriebs in Richtung der Flächennormalen der Hand (1) verfahrbar ist.

5. Vorrichtung nach Anspruch 4, **dadurch gekennzeichnet, daß** das stiftförmige Teil (7) an seinem der Hand (1) zugewandten Ende eine Gleitfläche oder eine drehbar gelagerte Kugel hat.

6. Vorrichtung nach einem der Ansprüche 1, 2 oder 3, **dadurch gekennzeichnet, daß** das reizausübende Mittel eine Luftdüse (9, 9a) ist, wobei mittels der Elektromotoren (16, 17) die Luftdüse (9, 9a) bewegbar ist und die Vorrichtung eine Pumpe hat, die Luft (11) ansaugt und diese durch die Luftdüse (9, 9a) pumpt.

7. Vorrichtung nach Anspruch 6, **dadurch gekennzeichnet, daß** die Pumpe von der Vorrichtung oder der Datenverarbeitungsanlage (3) einund ausschaltbar ist.

8. Vorrichtung nach Anspruch 7, **dadurch gekennzeichnet,daß** zwischen der Pumpe und der Luftdüse (9, 9a) ein Ventil ist, wobei das Ventil von der Vorrichtung steuerbar ist und bei geschlossenem Ventil keine Luft (11,11a) durch die Luftdüse (9, 9a) tritt

9. Vorrichtung nach einem der Ansprüche 4 bis 8, **dadurch gekennzeichnet, daß** mit dem reizausübenden Mittel eine gebündeltes Licht aussendende Quelle verfahrbar ist, deren Licht auf die reizzubeaufschlagende Stelle gerichtet ist.

10. Vorrichtung nach einem der vorherigen Ansprüche, **dadurch gekennzeichnet, daß** die Vorrichtung (2) eine Auflage hat, auf der die Hand (1) der Person ruht, wobei die Auflage die Hand (1) in einer bestimmten Stellung fixiert.

11. Vorrichtung nach Anspruch 10, **dadurch gekennzeichnet, daß** die Auflage ein horizontales Gitter ist, auf dem die Hand (1) der Person mit ihrer Handinnenfläche nach unten ruht und das reizausübende Mittel eine Luftdüse (9, 9a) ist, die die Hand (1) von unten her reizbeaufschlagt.

12. Vorrichtung nach Anspruch 10, **dadurch gekennzeichnet, daß** die Auflage ein Vakuumkissen ist.

13. Vorrichtung nach einem der vorherigen Ansprüche, **dadurch gekennzeichnet, daß** die Vorrichtung beweglich gelagert ist, derart, daß sie den Bewegungen der in ihr einliegenden Hand (1) der Person folgt.

14. Vorrichtung nach Anspruch 13, **dadurch gekennzeichnet, daß** die Vorrichtung an einem schwenk- und drehbar gelagerten Arm mit mindestens 2 Freiheitsgraden befestigt ist.

15. Einrichtung zur Kommunikation einer insbesondere taubblinden Person mit einer Datenverarbeitungsanlage mittels der Lorm-Sprache, wobei in einer Datenverarbeitungsanlage gespeicherte Zeichen mittels einer Vorrichtung nach einem der Ansprüche 1 bis 14 nacheinander an die Hand der Person übertragbar sind, **dadurch gekennzeichnet,daß**
die Einrichtung ein handschuhähnliches Teil (24) hat, in dessen Innenraum die Hand (1) der Person einleg- bzw. einschiebbar ist, wobei
- das handschuhähnliche Teil (24) mit seiner Innenfläche an der Hand (1) der Person anliegt und über die Innenfläche des handschuhähnlichen Teils (24) reizausübende Mittel (22,23) verteilt angeordnet sind, die mit der Datenverarbeitungsanlage (3) oder einer dazwischen geschalteten Steuerung verbunden und von dieser steuerbar sind, und
- daß auf der Oberfläche des handschuhähnlichen Teils (24) Sensoren oder eine Sensorfohe ist, die die auf die Oberfläche gezeichneten Zeichen insbesondere Punkte und Linien detektiert und in elektrische Signale umformt und die Signale an die Datenverarbeitungsanlage übermittelt.

16. Einrichtung nach Anspruch 15, **dadurch gekennzeichnet, daß** die Sensoren oder die Sensorfohe Druck-, Temperatur- oder Lichtsensoren sind/hat.

17. Einrichtung nach Anspruch 16, **dadurch gekennzeichnet, daß** die Sensoren bzw. die Sensoren in der Sensorfohe in einem Raster angeordnet sind .

18. Einrichtung nach einem der Ansprüche 16 oder 17, **dadurch gekennzeichnet, daß** jeder Sensor mit der Datenverarbeitungsanlage (3') in Verbindung ist.

19. Einrichtung nach Anspruch 18, **dadurch gekennzeichnet, daß** die Sensoren bzw. die Sensoren der Folie (27) entsprechend dem auf sie ausgeübten Reiz, Signale an die Datenverarbeitungsanlage (3') aussenden.

20. Einrichtung nach Anspruch 19, **dadurch gekennzeichnet, daß** ein Mindest-Reiz-Schwellwert einstellbar ist, wobei eine Elektronik vorgesehen ist, die den Schwellwert mit dem auf die Oberfläche ausgeübten Reiz vergleicht und Signale an die Datenverarbeitungsanlage (3') aussendet, wenn der ausgeübte Reiz größer ist als der voreingestellte Schwellwert.

21. Einrichtung nach einem der Ansprüche 15 bis 20, **dadurch gekennzeichnet, daß** je nach Position auf der Oberfläche des Eingabemediums (25) jeder Sensor eine unterschiedlich große Meßfläche hat und/oder jedem Sensor ein Schwellwert zugeordnet ist, der mittels der Datenverarbeitungsanlage (3') einstellbar bzw. veränderbar ist.

22. Einrichtung nach einem der Ansprüche 15 bis 21, **dadurch gekennzeichnet, daß** das reizausübende Mittel mittels Druck, Wärme und/oder Strom Reize auf die Hand (1) der Person ausübt.

23. Einrichtung nach Anspruch 22, **dadurch gekennzeichnet, daß** mehrere reizausübende Mittel (7,9,22) raster- oder matrixförmig nebeneinander angeordnet sind, wobei mehrere reizausübende Mittel (7,9,22) die Oberfläche der Hand (1) gleichzeitig oder nacheinander reizbeaufschlagen.

24. Einrichtung nach einem der vorherigen Ansprüche 15 bis 23, **dadurch gekennzeichnet, daß** das handschuhähnliche Teil (24) aus einem flexiblen Material besteht.

25. Einrichtung nach einem der Ansprüche 15 bis 24, **dadurch gekennzeichnet, daß** die Stärke des vom reizausübenden Mittel (7, 9, 22) ausgeübten Reizes einstellbar oder einregelbar ist.

26. Einrichtung nach einem der Ansprüche 15 bis 25, **dadurch gekennzeichnet, daß** die Einrichtung ein Eingabemedium hat, mittels der die Übertragung steuerbar ist, wobei die Zahl der zu übertragenden Zeichen pro Zeiteinheit einstellbar und/oder die Übertragung startbar, anhaltbar oder wiederholbar ist.

27. Verfahren zum Übermitteln von Zeichen mittels der Vorrichtung nach einem der vorherigen Ansprüche, **dadurch gekennzeichnet, daß** die Vorrichtung mittels einer in einem Speicher gespeicherten Übersetzungstabelle einen zu übertragenden Buchstaben oder zu übertragende Buchstabenreihen bestimmten Punkten, Bahnen und/oder Flächen der Hand (11) der Person zuordnet, und anschließend die Vorrichtung die zugeordneten Punkte (1a) oder Bahnen der Hand (1) der Person mittels der bzw. des reizausübenden Mittel(s) (7,9,22) reizbeaufschlagt.

28. Verfahren nach Anspruch 27, **dadurch gekennzeichnet, daß** zu Beginn der Übertragung die Person ihre Hand (1) in die Vorrichtung (2) einlegt und die Vorrichtung die Größe bzw. die Konturen der Hand (1) und/oder die Position der Hand (1) in der Vorrichtung (2) erfaßt und die Größe und/oder die Position in einem Speicher speichert.

29. Verfahren nach einem der Ansprüche, **dadurch gekennzeichnet, daß** die zu übertragenden Buchstaben eines Textes in der Datenverarbeitungsanlage (3) gespeichert sind und nacheinander von der Vorrichtung an die Person übertragen werden, wobei die Person die Übertragungsgeschwindigkeit mittels des Eingabemediums bestimmt, sowie die Übertragung startet und stoppt oder bestimmte Textpassagen erneut übertragen läßt.

30. Vorrichtung nach einem der vorherigen Ansprüche, **dadurch gekennzeichnet, daß** die Datenverarbeitungsanlage mittels eines Übertragungsmediums mit der Datenverarbeitungsanlage einer zweiten oder weiteren Vorrichtung in Verbindung ist und Daten austauscht.

## Claims

1. Device for transmitting a deaf-blind language, wherein signs which are stored in a data processing system can be transmitted in succession to a person, **characterised in that**
- the device has at least one stimulus-exerting means (7, 9, 22), and that
- the stimulus-exerting means (7, 9, 22) intermittently stimulates a hand (1), lying at or near the stimulus-exerting means (7, 9, 22), of the person in the form of points, as an area and/or from a starting point to an end point in the form of tracks or lines, wherein the signs can be associated with certain points, tracks, lines and/or areas on the hand (1), and that
- the stimulus-exerting means (7, 9) is mounted in mobile fashion and can be moved by means of at least one actuating drive (5a, 5b) into a position which can be predetermined by a control (3) and/or in tracks which can be arbitrarily predetermined, in particular freely in space, in program-controlled fashion by means of a x-y drive.

2. Device according to Claim 1, **characterised in that** the device (2) has electric motors which are controlled or regulated by a control (3), wherein the electric motors move the stimulus-exerting means (7, 9) from one position to the next.

3. Device according to Claim 1, **characterised in that** the stimulus-exerting means (7, 9, 22) can be moved by means of a hydraulic drive.

4. Device according to any one of the preceding Claims, **characterised in that** the stimulus-exerting means is a pin-shaped part (7) which subjects the person's hand (1) to point pressure, and that the pin-shaped part (7) can be moved by means of an actuating drive in the direction of the normal to the surface of the hand (1).

5. Device according to Claim 4, **characterised in that** the pin-shaped part (7) has a slide face or a rotatably mounted ball at its end which faces the hand (1).

6. Device according to any one of Claims 1, 2 and 3, **characterised in that** the stimulus-exerting means is an air nozzle (9, 9a), wherein the air nozzle (9, 9a) can be moved by means of the electric motors (16, 17), and the device has a pump which draws in air (11) and pumps this through the air nozzle (9, 9a).

7. Device according to Claim 6, **characterised in that** the pump can be turned on and off by the device or the data processing system (3).

8. Device according to Claim 7, **characterised in that** there is a valve between the pump and the air nozzle (9, 9a), wherein the valve can be controlled by the device and no air (11, 11a) passes through the air nozzle (9, 9a) when the valve is closed.

9. Device according to any one of Claims 4 to 8, **characterised in that** a source which emits focused light can be moved with the stimulus-exerting means, the light of which source is directed at the location which is to be stimulated.

10. Device according to any one of the preceding Claims, **characterised in that** the device (2) has a support on which the person's hand (1) rests, wherein the support fixes the hand (1) in a certain position.

11. Device according to Claim 10, **characterised in that** the support is a horizontal grid on which the person's hand (1) rests with the latter's palm downwards, and the stimulus-exerting means is an air nozzle (9, 9a) which stimulates the hand (1) from below.

12. Device according to Claim 10, **characterised in that** the support is a vacuum pad.

13. Device according to any one of the preceding Claims, **characterised in that** the device is mounted in mobile fashion, such that it follows the movements of the person's hand (1) lying in it.

14. Device according to Claim 13, **characterised in that** the device is fastened to a pivotably and rotatably mounted arm with at least 2 degrees of freedom.

15. Apparatus for communication by, in particular, a deaf-blind person, with a data processing system by means of the Lorm language, wherein signs which are stored in a data processing system can be transmitted in succession to the person's hand by means of a device according to any one of Claims 1 to 14, **characterised in that**
- the device has a glove-like part (24), in the interior space of which the person's hand (1) can be laid or inserted, wherein
- the glove-like part (24) lies with its inner face against the person's hand (1), and stimulus-exerting means (22, 23) are disposed in distributed fashion over the inner face of the glove-like part (24), which means are connected to the data processing system (3) or an interconnected control and can be controlled by this, and
- that on the surface of the glove-like part (24) are/is sensors or a sensor film for detecting the signs, in particular points and lines, which are drawn on the surface, and converting them into electrical signals and transmitting the signals to the data processing system.

16. Apparatus according to Claim 15, **characterised in that** the sensors or the sensor film are/has pressure, temperature or light sensors.

17. Apparatus according to Claim 16, **characterised in that** the sensors or those in the sensor film are arranged in a matrix.

18. Apparatus according to either of Claims 16 and 17, **characterised in that** each sensor is connected to the data processing system (3').

19. Apparatus according to Claim 18, **characterised in that** the sensors or those of the film (27) emit signals to the data processing system (3') according to the stimulus which is exerted on them.

20. Apparatus according to Claim 19, **characterised in that** a minimum stimulus threshold can be set, wherein electronics are provided which compare the threshold with the stimulus which is exerted on the surface and emit signals to the data processing system (3') if the exerted stimulus exceeds the preset threshold.

21. Apparatus according to any one of Claims 15 to 20, **characterised in that** each sensor has a measuring face of differing size, and/or a threshold which can be set or varied by means of the data processing system (3') is associated with each sensor, depending on the position on the surface of the input medium (25).

22. Apparatus according to any one of Claims 15 to 21, **characterised in that** the stimulus-exerting means exerts stimuli on the person's hand (1) by means of pressure, heat and/or current.

23. Apparatus according to Claim 22, **characterised in that** a plurality of stimulus-exerting means are arranged side by side in the form of a grid or matrix, wherein a plurality of stimulus-exerting means stimulate the surface of the hand (1) simultaneously or in succession.

24. Apparatus according to any one of the preceding Claims 15 to 23, **characterised in that** the glove-like part (24) consists of a flexible material.

25. Apparatus according to any one of Claims 15 to 24, **characterised in that** the strength of the stimulus which is exerted by the stimulus-exerting means (7, 9, 22) can be set or adjusted.

26. Apparatus according to any one of Claims 15 to 25, **characterised in that** the apparatus has an input medium, by means of which the transmission can be controlled, wherein the number of signs to be transmitted per unit of time can be set and/or the transmission can be started, stopped or repeated.

27. Method for transmitting signs by means of the device according to any one of the preceding Claims, **characterised in that** the device associates a character which is to be transmitted or series of characters which are to be transmitted with certain points, tracks and/or areas of the person's hand (1) by means of a transmission table which is stored in a memory, and the device subsequently stimulates the associated points (1a) or tracks of the person's hand (1) by means of the stimulus-exerting means or plurality of stimulus-exerting means (7, 9, 22).

28. Method according to Claim 27, **characterised in that** at the beginning of the transmission the person lays his/her hand (1) in the device (2) and the device detects the size or the contours of the hand (1) and/or the position of the hand (1) in the device (2) and stores the size and/or the position in a memory.

29. Method according to any one of the preceding Claims, **characterised in that** the characters of a text which are to be transmitted are stored in the data processing system (3) and transmitted in succession from the device to the person, wherein the person determines the transmission speed by means of the input medium and starts and stops the transmission or lets certain text passages be retransmitted.

30. Device according to any one of the preceding Claims, **characterised in that** the data processing system is connected to the data processing system of a second or further device and exchanges data with this by means of a transmission medium.

## Revendications

1. Dispositif de transmission d'un langage de sourd-aveugle, avec lequel des signes mémorisés dans une installation de traitement de données peuvent être transmis successivement à une personne,
**caractérisé en ce que**
- le dispositif comporte au moins un moyen (7, 9, 22) exerçant une stimulation,
- le moyen (7, 9, 22) exerçant une stimulation stimule périodiquement une main (1) de la personne se trouvant sur ou à proximité du moyen (7, 9, 22) exerçant une stimulation de façon ponctuelle, par surface ou à partir d'un point de départ vers un point d'extrémité, et ce en forme de bandes ou de lignes, les signes pouvant être associés à certains points, bandes, lignes et/ou surfaces de la main (1), et
- **en ce que** le moyen (7, 9) exerçant une stimulation est disposé de façon mobile, est commandé par programme moyennant un entraînement x-y et peut être déplacé moyennant au moins un servomoteur (5a, 5b) dans une position pouvant être prédéterminée par une commande (3) et/ou dans des bandes pouvant être prédéterminées de façon quelconque, notamment librement dans l'espace.

2. Dispositif selon la revendication 1, **caractérisé en ce que** le dispositif (2) comporte des moteurs électriques qui sont commandés ou réglés par une commande (3), les moteurs électriques déplaçant le moyen (7, 9) exerçant une stimulation d'une position vers la suivante.

3. Dispositif selon la revendication 1, **caractérisé en ce que** le moyen (7, 9, 22) exerçant une stimulation peut être déplacé au moyen d'un entraînement hydraulique.

4. Dispositif selon l'une quelconque des revendications précédentes, **caractérisé en ce que** le moyen exerçant une stimulation est un élément (7) en forme de broche, qui exerce ponctuellement une pression sur la main (1) de la personne, et **en ce que** l'élément (7) en forme de broche peut être déplacé dans la direction de la normale de la surface de la main (1) moyennant un servomoteur.

5. Dispositif selon la revendication 4, **caractérisé en ce que**, sur son extrémité orientée vers la main (1), l'élément (7) en forme de broche comporte une surface de glissement ou une bille montée en rotation.

6. Dispositif selon l'une quelconque des revendications 1, 2 ou 3, **caractérisé en ce que** le moyen exerçant une stimulation est une buse d'air (9, 9a), la buse d'air (9, 9a) pouvant être déplacée au moyen des moteurs électriques (16, 17), et le dispositif comportant une pompe qui aspire l'air (11) et le pompe à travers la buse d'air (9, 9a).

7. Dispositif selon la revendication 6, **caractérisé en ce que** la pompe peut être mise en route et arrêtée par le dispositif ou l'installation de traitement de données (3).

8. Dispositif selon la revendication 7, **caractérisé en ce qu'**une vanne est prévue entre la pompe et la buse d'air (9, 9a), la vanne pouvant être commandée par le dispositif, et l'air (11, 11a) ne passant pas à travers la buse d'air (9, 9a) lorsque la vanne est fermée.

9. Dispositif selon l'une quelconque des revendications 4 à 8, **caractérisé en ce qu'**une source émettant de la lumière focalisée, dont la lumière est dirigée sur l'emplacement stimulé, peut être déplacée avec le moyen exerçant une stimulation.

10. Dispositif selon l'une quelconque des revendications précédentes, **caractérisé en ce que** le dispositif (2) comporte un support sur lequel repose la main (1) de la personne, le support immobilisant la main (1) dans une certaine position.

11. Dispositif selon la revendication 10, **caractérisé en ce que** le support est une grille horizontale sur laquelle la main (1) de la personne repose avec sa paume orientée vers le bas, et **en ce que** le moyen exerçant une stimulation est une buse d'air (9, 9a) qui stimule la main (1) à partir du bas.

12. Dispositif selon la revendication 10, **caractérisé en ce que** le support est un coussin sous vide.

13. Dispositif selon l'une quelconque des revendications précédentes, **caractérisé en ce que** le dispositif est monté de façon mobile de telle sorte qu'il suive les mouvements de la main (1) introduite de la personne.

14. Dispositif selon la revendication 13, **caractérisé en ce que** le dispositif est fixé sur un bras qui est monté de façon à pouvoir pivoter et tourner, avec au moins 2 degrés de liberté.

15. Dispositif destiné à la communication d'une personne, notamment sourde-aveugle, avec une installation de traitement de données au moyen du langage Lorm, avec lequel des signes mémorisés dans une installation de traitement de données peuvent être transmis successivement à la main de la personne au moyen d'un dispositif selon l'une quelconque des revendications 1 à 14, **caractérisé en ce que**
le dispositif comporte un élément de type gant (24), dans l'espace intérieur duquel peut être placée ou insérée la main (1) de la personne
- l'élément de type gant (24) adhère à la main (1) de la personne par sa face intérieure, et **en ce que** des moyens (22, 23) exerçant une stimulation sont disposés en étant répartis sur la face intérieure de l'élément de type gant (24), lesquels sont reliés à l'installation de traitement de données (3) ou à une commande intercalée, et peuvent être commandés par celle-ci, et
- **en ce que** des capteurs ou un film de capteurs sont prévus sur la surface de l'élément du type gant (24), qui détectent les signes, notamment des points et des lignes marqués sur la surface, les convertissent en signaux électriques, et transmettent les signaux à l'installation de traitement de données.

16. Dispositif selon la revendication 15, **caractérisé en ce que** les capteurs ou le film de capteurs sont/comporte des capteurs de pression, de température ou de lumière.

17. Dispositif selon la revendication 16, **caractérisé en ce que** les capteurs ou les capteurs du film de capteurs sont disposés selon une trame.

18. Dispositif selon l'une des revendications 16 ou 17, **caractérisé en ce que** chaque capteur est relié à l'installation de traitement de données (3').

19. Dispositif selon la revendication 18, **caractérisé en ce que** les capteurs ou les capteurs du film (27) émettent des signaux vers l'installation de traitement de données (3') en fonction de la stimulation qui est exercée sur eux.

20. Dispositif selon la revendication 19, **caractérisé en ce qu'**une valeur de seuil de stimulation minimale peut être réglée, une électronique étant prévue, qui compare la valeur de seuil avec la stimulation exercée sur la surface, et émet des signaux vers l'installation de traitement de données (3') lorsque la stimulation exercée est supérieure à la valeur de seuil préalablement réglée.

21. Dispositif selon l'une quelconque des revendications 15 à 20, **caractérisé en ce que**, en fonction de la position sur la surface du média d'entrée (25), chaque capteur possède une surface de mesure de taille différente et/ou une valeur de seuil pouvant être réglée ou modifiée au moyen de l'installation de traitement de données (3') est associée à chaque capteur.

22. Dispositif selon l'une quelconque des revendications 15 à 21, **caractérisé en ce que** le moyen exerçant une stimulation stimule la main (1) de la personne au moyen de pression, de chaleur ou de courant.

23. Dispositif selon la revendication 22, **caractérisé en ce que** plusieurs moyens (7, 9, 22) exerçant une stimulation sont disposés les uns à côté des autres en forme de trame ou de matrice, plusieurs moyens (7, 9, 22) exerçant simultanément ou successivement une stimulation sur la surface de la main (1).

24. Dispositif selon l'une quelconque des revendications précédentes 15 à 23, **caractérisé en ce que** l'élément de type gant (24) est constitué d'un matériau flexible.

25. Dispositif selon l'une quelconque des revendications 15 à 24, **caractérisé en ce que** l'intensité de la stimulation exercée par le moyen (7, 9, 22) exerçant une stimulation est ajustable ou réglable.

26. Dispositif selon l'une quelconque des revendications 15 à 25, **caractérisé en ce que** le dispositif comporte un média d'entrée au moyen duquel la transmission peut être commandée, le nombre de signes à transmettre par unité de temps étant réglable et/ou la transmission pouvant être lancée, arrêtée ou répétée.

27. Procédé de transmission de signes au moyen d'un dispositif selon l'une quelconque des revendications précédentes, **caractérisé en ce que**, au moyen d'un tableau de traduction mémorisé dans une mémoire, le dispositif associe une lettre à transmettre ou des séries de lettres à transmettre à certains points, bandes et/ou surfaces de la main (11) de la personne, et **en ce que** le dispositif stimule ensuite les points associés (la) ou bandes de la main (1) de la personne au moyen du ou des moyen(s) (7, 9, 22) exerçant une stimulation.

28. Procédé selon la revendication 27, **caractérisé en ce que** la personne introduit sa main (1) dans le dispositif (2) au début de la transmission, et **en ce que** le dispositif détecte la taille ou les contours de la main (1) et/ou la position de la main (1) dans le dispositif (2), et mémorise la taille et/ou la position dans une mémoire.

29. Procédé selon l'une des revendications précédentes, **caractérisé en ce que** les lettres d'un texte à transmettre sont mémorisées dans l'installation de traitement de données (3), et sont transmises successivement à la personne par le dispositif, la personne pouvant définir la vitesse de transmission au moyen du média d'entrée, ainsi que lancer et stopper la transmission ou se faire retransmettre certains passages du texte.

30. Dispositif selon l'une quelconque des revendications précédentes, **caractérisé en ce que** l'installation de traitement de données est en liaison au moyen d'un média de transmission avec l'installation de traitement de données d'un deuxième ou d'un autre dispositif, et échange des données.
